# EUROPEAN PATENT SPECIFICATION

(11) **EP 3 256 895 B1**
(45) Date of publication and mention of the grant of the patent: **21.09.2022**
(21) Application number: 15719832.6
(22) Date of filing: 11.02.2015
(51) Int. Cl.: G02B 6/44, H04Q 1/02

(54) **CABINET FOR HANDLING CABLES**
SCHRANK FÜR KABELHANDHABUNG
ARMOIRE POUR LA MANIPULATION DE CÂBLES

(43) Date of publication of application: 20.12.2017
(73) Proprietor: Prysmian S.p.A., 20126 Milan (IT)
(72) Inventor: ROBERTS, Kris Jonathan, I-20126 Milano (IT); WAY, Rory John Geoffrey, I-20126 Milano (IT); GRIFFITHS, Ian James, I-20126 Milano (IT)
(74) Representative: Hoffmann Eitle
(86) International application number: PCT/IT2015/000031
(87) International publication number: WO 2016/129002

(56) References cited:
- GB-A- 2 516 322
- US-A- 5 219 443
- US-A1- 2003 039 108
- US-A1- 2007 092 195
- US-B1- 6 535 682

## Description

### TECHNICAL FIELD OF THE INVENTION

The field of the present invention concerns a cabinet for receiving one or more modules (or racks) adapted for handling cables and, in particular, optical cables.

### BACKGROUND OF THE INVENTION

A FTTH ("Fiber To The Home") network is an optical access network providing a number of end customers with broadband communication services from operators, i.e. with services requiring data transmission at a very high rate, for example of some Mbit/s.

Within the framework of the present description and in the following claims, the term "optical access network" is used to indicate optical cables and devices forming the connecting architecture which is typically designed on the base of customer's residence, which can be either single dwelling units (houses) or multi dwelling units (apartment blocks).

Typically, a FTTH network comprises a central unit which is connected with one (or more) distribution box or cabinet.

Cabinets for handling optical cables are known. This kind of cabinet can be installed, for example, at the basement of a building including apartments and/or offices, at telephone exchanges or at datacenters.

Within the framework of the present description and in the following claims, the term "handling optical cables" is used to indicate the arrangement for the management of the plurality of optical cables that enters and exits in and from a cabinet. For example, when installed in a building for providing services to final users, the cabinet receives input optical cables of a distribution network. Optical modules (e.g. 19" racks or sub-racks) are mounted inside the cabinet, which are configured for supporting trays, connectors and adapters necessary for connecting the optical cables of the distribution networks with the optical cables installed inside the building. The cables installed in the building reach plural users locations (for example, flats and/or offices) inside the building.

Known cabinets are generally made of metal and includes several bulky components which cannot be easily transported and assembled on site.

For example, US 5,219,443 discloses a cabinet for the acceptance of electronic devices. The cabinet has side walls, a floor, and a ceiling that can be shaped of planar or sheet metal blanks and that are connected one another with connector elements. The front and back walls as well as the side walls have prescribed heights or standardized incremental heights, whereby vertically adjacent side walls, front wall segments and back wall segments can be connected to one another via the connecting elements to form the side walls, front walls and back walls respectively. An existing cabinet can be simply expanded in height in this way without extensive remodeling. For vertically expanded cabinets, or for wherever increased lateral stability is desired, a cross member can be utilized to provide lateral stability to the equipment cabinet. The cross member can be a bar or sheet metal component which can be fixed to opposite connector elements, spanning opposite side walls. Here, having a frame constituted by walls and lateral panels fixed at the corner, the cabinet is exposed to potential instability. A cross member has to be added to provide lateral stability of the equipment.

According to GB 2,250,845, a modular casing comprises edge portions and corner portions, with each corner portion interlocked with adjacent edge portions to form a framework, and panels which are retained by engagement with the edge portions. In order to achieve a required edge length, the modular casing includes edge portions of different lengths. The panels are held firmly in place within the framework formed by the edge portions and corner portions by the interaction of its projections with the slots or grooves defined in adjacent edge portions. The casing components are preferably formed of plastic. More particularly, a thermoplastic such as acrylonitrile butadiene styrene (ABS) may be used. The components (or parts thereof) could also be manufactured from wood, metal or ceramic materials. Different materials (such as metal) may be used for different parts where appropriate for increased strength, flexibility or resilience. This solution needs corner portions and very thin edge portions. For height increasing, it is necessary to change the corner portion with a new one different portion.

US 6 535 682 B1 discloses a cabinet with two single-piece angular panels mounted separately on a rack and overlapping each other for forming the backside wall of said cabinet. GB 2 516 322 A discloses a telecommunication cabinet with flat panels with male-female engagement, said panels being non vertically stacked. Other arrangements for telecommunication cabinets are known from US 2003/039108 A1 and US 2007/092195 A1.

Thus, existing modular cabinets are constituted by of a lot of parts and/or by several parts of large dimension. The transportation on site of all components of the cabinet results burdensome and the assembling on site is complex and time consuming.

### SUMMARY OF THE INVENTION

In view of the above problems, the Applicant has tackled the problem of providing a cabinet which can be easily assembled on site, while maintaining a mechanical strength comparable to the existing cabinets.

The Applicant has found that in order to ensure a proper mechanical strength and stability in each direction it is convenient to have a box-shaped cabinet comprising a single-piece angular panel which includes a portion of the side wall and a portion of the rear or front wall, in which said portions have each a length from the corner of the angular panel at least 10% of its height.

Therefore, one aspect the present invention refers to a cabinet for receiving one or more modules for handling cables, comprising a housing with a rear wall, a bottom wall, a top wall, a first side wall, a second side wall and a front wall provided with a door for accessing inside the housing; the cabinet comprises a single-piece angular panel including a first portion forming part of one of said side walls and a second portion forming part of one of the rear or front walls, wherein the length of the first and of the second portions in the horizontal direction with respect to the cabinet is at least 10% of the height of the angular panel in the vertical direction with respect to the cabinet.

Thanks to the presence of the angular panels, the cabinet can be easily assembled on site. In fact, the angular panels firmly maintain their orientation while being mounted, thereby making the assembling on site easier and quicker.

Preferably, the length of the first and second portions in the horizontal direction is at least 20% of the height of the angular panel in the vertical direction. This further improves mechanical strength and stability in each direction.

Preferably, the angular panel is an L-shaped panel having an L-shaped cross section. Alternatively, the angular panel has a C-shaped, E-shaped, T-shaped cross section, according to the specific installation requirements. Thanks to said possible shaped cross sections, the angular panels can be easily stored and can be packed by minimizing the space of the package containing the panels for transportation.

According to the invention, the cabinet comprises a plurality of angular panels vertically stacked each on the other. In this way, the vertical dimension of the pieces forming the cabinet is reduced, thereby making the transport and the assembling less burdensome.

According to the invention, said first portion of each of the angular panels forms a segment of said side wall, the segment extending from the rear wall to the front wall. This allows to reduce the number of pieces forming the cabinet, thereby reducing complexity of the product and further easing the assembling operation.

According to the invention, the cabinet comprises a stack of angular panels, forming part of a side wall. Thus, a structure that can be easily expanded in the vertical direction is achieved by adding angular panels in the stack; cabinets of different heights can be easily assembled depending on the needs of the user.

Preferably, the cabinet comprises two stacks of angular panels, each stack forming the first and the second side walls respectively.

Preferably, all angular panels are substantially identical to each other. With "substantially identical" it is hereby meant that the angular panels are interchangeable with one another, without left/right or upside/down differences or the like. This allows reducing manufacturing costs, since the same mold can be used for producing plural pieces of the cabinet.

Preferably, the cabinet comprises a back panel interposed between at least two angular panels, for forming the back wall of the housing. Hence, it is possible to build larger cabinet while keeping the lateral dimension of the angular panel relatively small.

Preferably, the cabinet comprises two vertical rails inside the housing, on which the modules can be mounted. This allows to firmly support the optical modules in the desired position, without requiring high mechanical strength of the components forming the housing of the cabinet.

Preferably, the bottom wall is supported by a plurality of feet, wherein each of said rails are mounted vertically aligned with one of said plurality of feet. This allows to reduce propagation of the vertical load to the components forming the housing, which would arise due to the weight of the optical modules mounted in the cabinet.

Preferably, each rail includes an upper end fixed to the top wall of the housing and a lower end fixed to the bottom wall of the housing. Therefore, overall stability of the cabinet is improved reducing the risk of detachment of the stacked angular panels in the vertical direction.

Preferably, the top wall is formed by a top panel engaged with an upper angular panel of one or more stacked angular panels, and the bottom wall is formed by a bottom panel engaged a lower angular panel of one or more stacked angular panels. This allows to achieve a cabinet which can be more easily assembled on site.

Preferably, the top panel is substantially identical to the bottom panel in order to reduce manufacturing costs, since the same mold can be used for producing plural pieces of the cabinet.

According to the invention, each of the angular panels includes male engaging means on a first side and female engaging means on a second side opposite to a first side, the male and female engaging means of an angular panel being adapted for engaging respectively with the female and male engaging means of an adjacent angular panel of the plurality of stacked angular panels. This allows to easily mount the angular panels by directly engaging each angular panel with an adjacent one.

Preferably, the male engaging means includes one or more projections extending in a longitudinal direction of the angular panel corresponding to the vertical direction with respect to the cabinet. In this way, the angular panels can be easily mounted by stacking them one over the other in the vertical direction.

Preferably, the angular panels, the bottom panel and the top panel are made of polymeric thermoplastic material. The weight of the components forming the housing is reduced, thus easing transportation and assembling thereof.

Preferably, the angular panel comprises a hinge portion for mounting the door in a rotatable way, the hinge portion being formed at a lateral edge of the angular panel opposite to the rear wall. This allows to reduce the complexity and the cost of the cabinet, as the door can be directly mounted on the angular panel.

In another aspect, the present invention relates to a kit for forming a cabinet as specified in claim 14. The kit includes the components before assembling and may be advantageously packed in a box and easily transported on site.

### BRIEF DESCRIPTION OF THE DRAWINGS

The above and other advantages of the present invention will be illustrated with reference to an example embodiment of the invention, described with reference to the appended drawings listed as follows.
FIG. 1 shows a perspective view of the cabinet in which part of the left door is removed;
FIG. 2 shows a perspective view of one L-shaped panel;
FIGS. 3 and 4 show two L-shaped panels just before and after stacking one panel on the other;
FIG. 5 shows a detail of the connection of two adjacent L-shaped panels;
FIGS. 6 and 7 show two L-shaped panels just before and after engagement with a bottom panel of the cabinet;
FIG. 8 shows the mounting of a vertical rail on the bottom panel and on a foot of the cabinet.

### DETAILED DESCRIPTION OF THE PREFERRED EMBODIMENTS

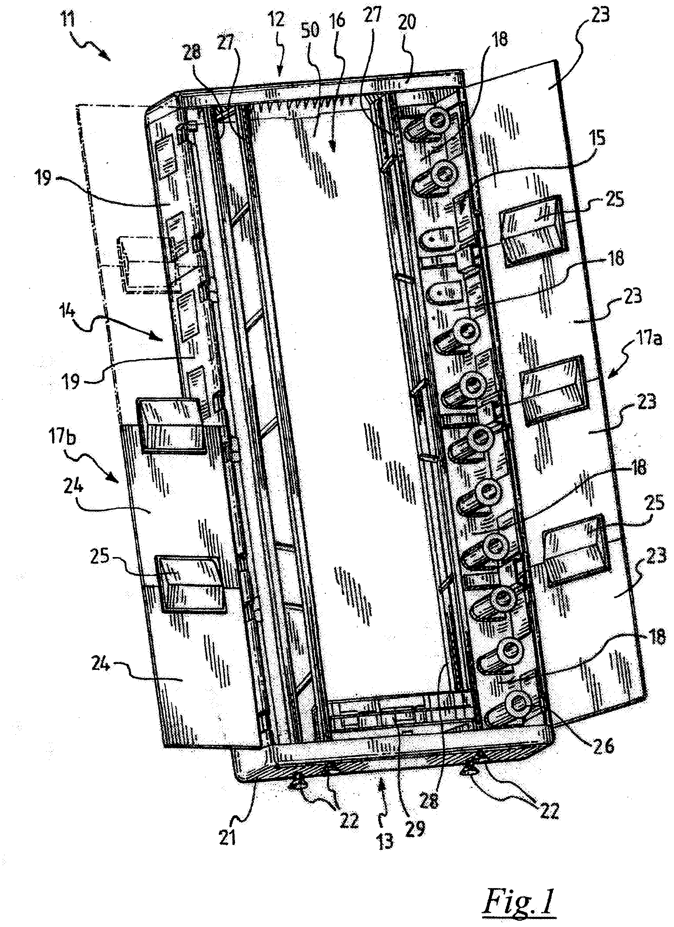

Figure 1 shows a cabinet 11 for handling cables according to an embodiment of the invention. The cabinet 11 comprises a housing adapted for receiving modules 29 for handling cables, in particular optical cables. The cabinet 11 is adapted to abut on the floor of a room in which the cabinet is installed.

For the purposes of the present description and claims an optical cable is deemed to be an optical cable comprising one or more optical fibers, possibly arranged inside one or more buffer tubes, an outer sheath and, optionally, one or more strength members.

An optical fiber typically comprises an optical waveguide, constituted by an optically transmissive core, surrounded by a cladding. The optical waveguide is preferably covered by at least one protective coating layer ("coating"). Typically two protective coating layers are present: the first coating layer ("primary coating") is in direct contact with the optical waveguide, while the second coating layer ("secondary coating") covers the primary coating. In addition, a buffer layer may cover each optical fiber, the buffer layer may be substantially in contact with the secondary coating ("tight buffer") or it may consist of a small tube of inner diameter somehow larger than the outer diameter of the secondary coating ("loose buffer").

The optical modules 29 may be formed as 19" racks or sub-racks. In figure 1 only one optical module 29 is shown, but several modules may be mounted inside the cabinet 11 one above the other. The optical modules 29 can be used for connecting optical cables of a distribution network with optical cables installed inside the building that hosts the cabinet (such as in an FTTH application). The optical modules 29 can also include reels for winding a length of cable, in addition to connectors (not shown).

The housing of the cabinet 11 includes a top wall 12, a bottom wall 13, a first side (or lateral) wall 15, a second side (or lateral) wall 14, and a rear wall 16. Opposite to the rear wall 16, the cabinet includes a front wall. In the embodiment of figure 1, the front wall is entirely composed by the two doors 17a and 17b in closed state (in figure 1, the doors 17a, 17b are shown in open state). However, different arrangements of the front wall may be provided, in which the doors form only part of the front wall and not the entire front wall as in figure 1. Only one door might be provided alternatively, instead of two doors as shown in the figure. When the doors of the cabinet are open, the inside of the cabinet can be accessed, and the modules 29 for handling the cables can be reached by the operator.

According to the invention, the cabinet includes a plurality of angular panels 18 forming part of the first side wall 15 and part of the back wall 16. Advantageously, the angular panel 18 presents an L-shaped cross section in a plane horizontal with respect to the cabinet 1.

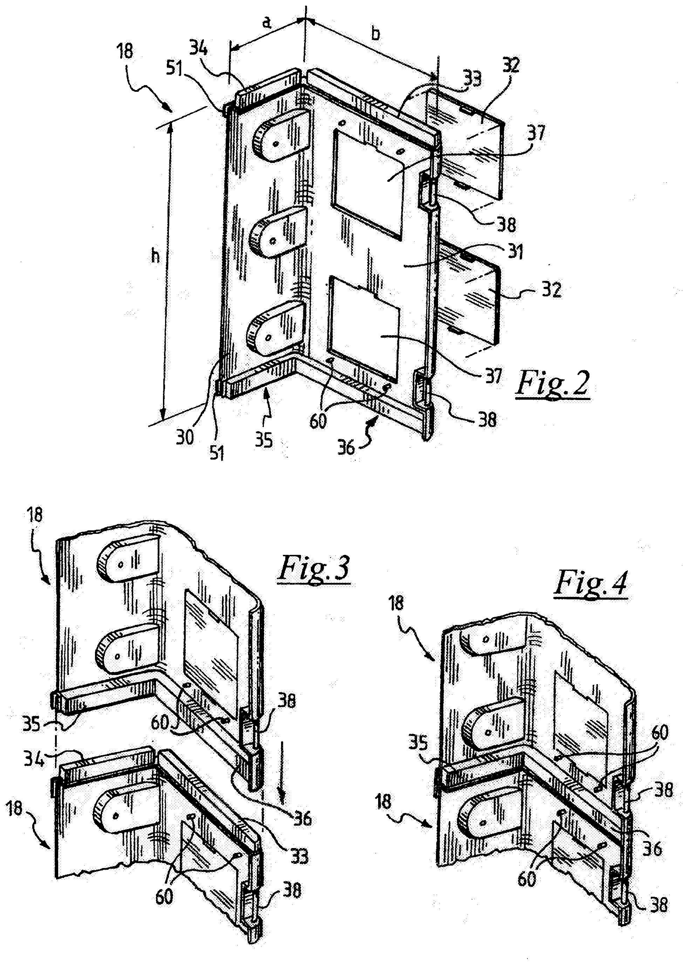

As shown in figure 2, the angular panel 18 (or L-shaped panel) includes a first portion 31 forming part of the first side wall 15 a second portion 30 forming part of the rear wall 16. The first and second portions 30, 31 have a substantially planar rectangular shape and are substantially vertical when the cabinet 11 is assembled. The first and second portions 30, 31 are joined at respective vertical edges to form a corner of 90°.

The length "a" of the second portion 30 and the length "b" of the first portion 31 are at least 1 0% of the height "h" of the L-shaped panel 18, wherein the lengths "a" and "b" are measured in an horizontal direction with respect to the cabinet, while the height "h" is measured in the vertical direction with respect to the cabinet.

The two portions 30, 31 confer stability to the angular panel 18 when mounting the cabinet, because the angular panel 18 can firmly stand alone in the correct mounting position due to its shape. Further, by forming a corner of the housing, the L-shaped panel 18 provides satisfactory mechanical strength and stability to the cabinet when assembled.

Preferably, the length "a" and the length "b" of the first and second portions 31, 30 are at least 20% of the height "h" of the L-shaped panel 18. Further, the length "a" and the length "b" of the first and second portions may be advantageously less than 150% of the height "h", more advantageously less than "h" and most advantageously less than 70% of "h".

Preferably, the length "a" is less than the length "b". According to a preferred embodiment, the length "a" is in the range between 20% and 40% of the height "h". According to a preferred embodiment, the length "b" is in the range between 40% and 60% of the height "h". According to a preferred embodiment, the length "a" is in the range between 20% and 80% of the length "b".

According to a preferred embodiment, the angular panel 18 has a length "a" of about 150 mm. The length "b" is about 300 mm. The length "h" is about 475 mm. Preferably, the angular panel 18 has a thickness of about 3 mm.

Each of the angular panels 18, 19 is formed in one single integral piece. Preferably, the angular panels 18, 19 are made of polymeric thermoplastic material.

According to the invention, the cabinet includes a plurality of vertically stacked angular panels 18. In figure 1, four angular panels 18 vertically stacked on each other are shown on the right side of the cabinet. This allows to reduce the vertical dimension of the pieces to be assembled, thereby making the transportation of the components on site easier.

Preferably, the cabinet includes two stacks of vertically stacked angular panels, one stack of angular panels 18 forming at least part of the first side wall 15 and the second stack of a vertically stacked angular panels 19 forming at least part of the second lateral wall 14 of the cabinet. In the example shown in the figures, also the second stack forming the lateral wall 14 is formed by four L-shaped panels 19. This allows to easily assemble cabinets of different heights depending on the number of L-shaped panels which are vertically stacked on each other. Thus, a cabinet according to the specific needs of the installer can be mounted on site.

Preferably, all angular panels 18 are substantially identical to each other; similarly, also all angular panels 19 are substantially identical to each other. With "substantially identical" it is hereby meant that the angular panels are interchangeable with one another, without left/right or upside/down differences or the like. Thus, the pieces can be obtained by using the same mold. This allows reducing the production costs of the components of the cabinet.

Most preferably, all angular panels 18 and 19 are substantially identical to each other, whereby the same piece can be mounted either on the left side or on the right side of the cabinet by rotating the piece of 180° upside down.

According the preferred embodiment as shown in figure 2, the angular panels 18 includes a first portion 31 forming a segment of the lateral wall 15 extending from the rear wall 16 to the front wall of the cabinet. In other words, the length "b" of the first portion 31 of the angular panel 18 is substantially as large as the side wall 15 of the cabinet 11. This further allows to reduce the number of pieces needed for assembling the cabinet and to improve stability of the structure when assembled.

The cabinet 11 further includes a back panel 50 interposed between the two stacks of angular panels 18 and 19. The back panel 50 forms the back wall 16 together with the second portions 30 of the angular panels 18 and 19. Preferably, the back panel 50 can be formed in one single piece made of polymeric thermoplastic material. The lateral edge of the back panel 50 can be received in grooves 51 formed on the second portion 30 of the angular panel 18 (see figure 2); similar grooves are formed in the angular panel 19 for receiving the opposite edge of the back panel 50.

Further, the cabinet includes a top panel 20 forming the top wall 12 of the housing and a bottom panel 21 forming the bottom wall 13 of the housing. Each of the top and bottom panels 20 and 21 is preferably formed in one single piece; further, the panels 20 and 21 are preferably made of polymeric thermoplastic material.

The top panel 20 is adapted to be engaged with an upper angular panels 18, 19 of the stacks of vertically stacked angular panels. Similarly, the bottom panel 21 is engaged with a lower angular panel 18, 19 of the vertically stacked angular panels. This structure further eases the assembling of the cabinet, allowing to use a limited number of pieces of small dimension. Preferably, the top panel and the bottom panel are substantially identical to each other, whereby the same piece can be used either as top panel or as bottom panel by rotating it by 180° upside down. This further allows to reduce the manufacturing costs by using the same mold for the two pieces 20, 21.

The doors 17a and 17b are each formed by a plurality of panels (or door segments) respectively 23 and 24 positioned adjacent to each other in the vertical direction (see figure 1). Each door segment 23 is connected in a rotatable manner to a corresponding L-shaped panel 18, so that four door segments 23 form door 17a as shown in figure 1. Only two door segments 24 are shown in figure 1 for door 17b, while the two upper door segments are only shown in dashed lines. The door segments 23 are connected to each other by means of the elements 25, having a planar shape and being fixed on the internal face of the door segments 23. In particular, each element 25 connects two adjacent door segments. A similar arrangement is provided for door 17b. Each door segment 23, 24 is preferably made in one single piece of polymeric thermoplastic material.

Preferably, the L-shaped panel 18 includes hinge portions 38 at one edge of the first portion 31 opposite to the second portion 30. Preferably, the L-shaped panel 18 includes two hinge portions 38, for example in the form of a pivot as shown in figure 2.

Further, the cabinet includes at least two rails 27 inside the housing. Most preferably, the cabinet 11 includes four vertical rails 27, 28 as shown in figure 1. The vertical rails 27, 28 can be made preferably of metal. The rails 27, 28 are configured for supporting the optical modules 29. To this end, the rails 27, 28 may be provided with mounting holes for receiving fixing means for fixing the optical modules 29 to the rails. Preferably, each of the vertical rails is fixed respectively to the top and bottom panels 20, 21 at the two opposite ends. This allows improving stability and overall strength of the structure. Each of the two front rails 27 are connected to the corresponding rear rail 28 by means of plural metal arms.

Preferably, the cabinet includes feet 22 on which the bottom panel 21 abuts, the feet being adapted for abutting on the floor. Preferably, each of the rails 27, 28 are vertically aligned with one of the feet 22. This allows to reduce the propagation of load due to the weight of the optical modules 29 on the bottom panel 21; thus, the cost and the weight of the components forming the housing can be reduced.

As shown in figures 2-4, each of the angular panels 18 includes male engaging means 33, 34 on a upper side and female engaging means 35, 36 on the lower side opposite with respect to the male engaging means 34 and 33. The male engaging means 33, 34 can engage with the female engaging means 35, 36 of a vertically adjacent angular panel 18.

The male engaging means 33, 34 extend in the vertical direction of the cabinet corresponding to a longitudinal direction of the angular panel 18 so as to allow an engagement of two adjacent angular panels 18 by a simple approaching movement along the longitudinal direction of the two pieces. This allows to easily stack the L-shaped panels one above the other by making the assembling particularly quick. Preferably, each of the first and second portions 31 and 30 of the angular panel is provided with male engaging means 33, 34 and with a female engaging means 35, 36. In figures 3 and 4, the mounting of two adjacent L-shaped panels 18 is shown.

Preferably, the angular panels 18, 19 may be provided with one or more openings 37 in the first portion 31 adapted to receive an insert 32 as shown in figure 2. By removing the insert 32, cables can enter or exit the cabinet through opening 37. The inserts 32 may engage into the openings 37 of the angular panels by means of a snap fit engagement.

Further, the cabinet may include a plurality of sleeves 26 on which excess cable can be wound. The sleeves 26 may be mounted on the second portion 30 of the angular panels 18, 19, being oriented in the horizontal direction from the rear wall to the front wall of the cabinet.

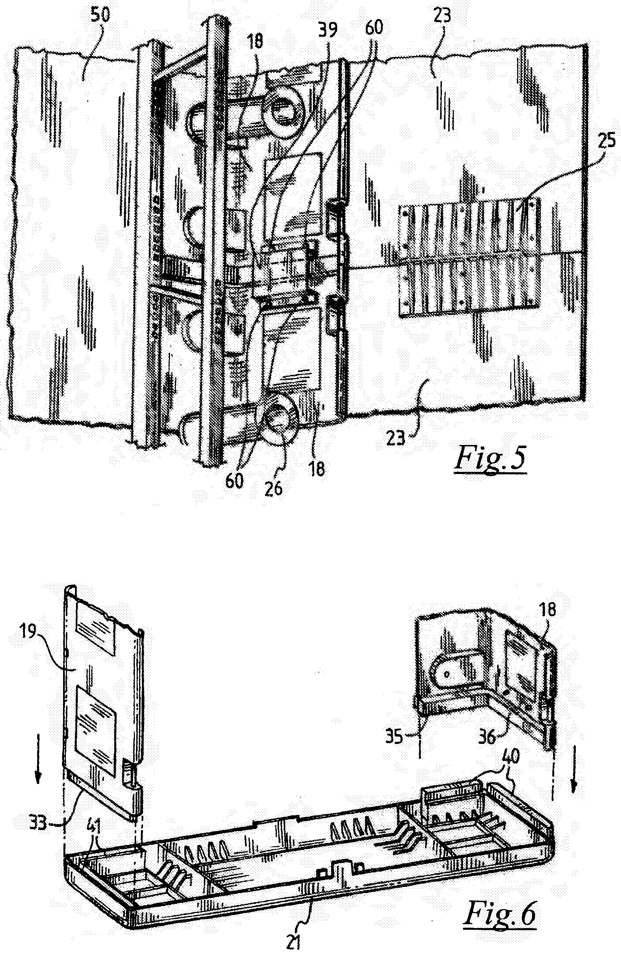

Preferably, after being stacked, two adjacent angular panels 18 may be further connected to each other by means of a C-shaped connecting element 39 as shown in figure 5, applied across the lower edge of an upper angular panel and the upper edge of a lower angular panel. Preferably, the C-shaped connecting element 39 is fixed to the inner side of the first portions 31 of the angular panels forming the side lateral wall 15 of the cabinet 11. The C-shaped element 39 includes two holes for receiving two corresponding projections 60 extending from a first angular panels 18 and two further holes for receiving projections 60 extending from a second angular panels 18 adjacent to the first one. The C-shaped element 39 preferably embraces the male/female engaging means of the two adjacent angular panels.

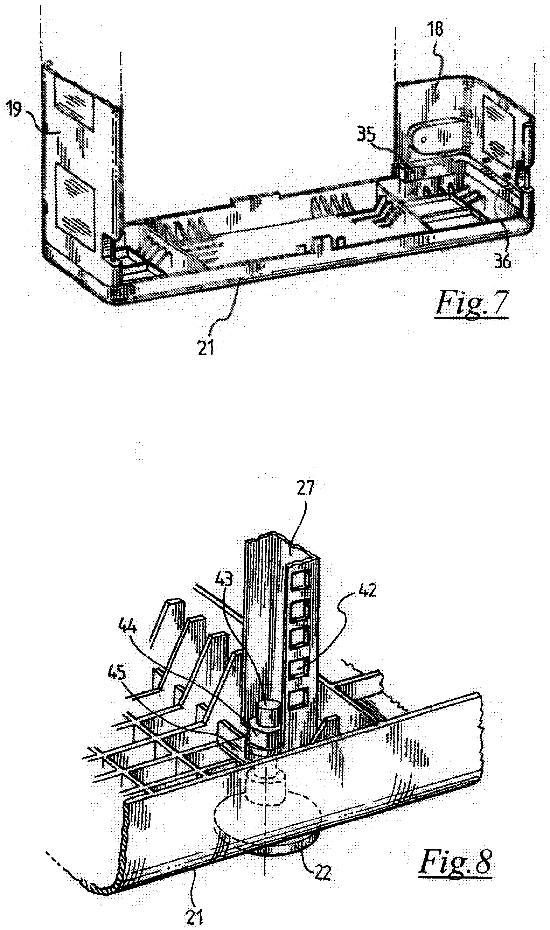

Figures 6 and 7 show the mounting of two angular panels 18 and 19 on the bottom panel 21. The angular panel 19 is identical to the angular panel 18 and rotated 180° upside down with respect to it, so that the male engaging means 33 of the angular panel 19 are oriented downwards, while the female engaging means 35, 36 are oriented downwards for angular panel 18. The bottom panel 21 includes on one side male engaging means 40 and on the opposite side the female engaging means 41. The male engaging means 40 of the panel 21 engage with the female engaging means 35, 36 of the angular panel 18, while the female engaging means 41 engage with the male engaging means 33 and 34 of the angular panel 19.

Figure 8 shows a detail of the connection of the rail 27 with the bottom panel 21 aligned with the foot 22. This figure shows the holes 42 in the rail 27 for mounting the optical modules 29. Further, the bolt 43 and the nut 44 form fastening means for fixing the bended edge 45 of the rail 27 to the foot 22 and the bottom panel 21.

According to the invention, a kit for mounting a cabinet such as cabinet 11 of figure 1 is provided. The kit includes a plurality of angular panels 18 configured for being vertically stacked on each other, the top panel 20 and the bottom panel 21. Several L-shaped panels may be provided in the kit, for example at least 8, so that different heights of the cabinet can be achieved by the assembler by simply varying the number of L-shaped panels to be vertically stacked. Further, the top and bottom panels and the L-shaped panels do not have large dimensions and can be easily transported on site. Further, when made of polymeric thermoplastic material, the weight of the L-shaped panels and of the top/bottom panels is reduced, thereby further reducing the burden for transporting and assembling the cabinet.

The overall dimensions of the cabinet may be as follows:
Height: 580 mm - 2000 mm;
Depth: 300 mm - 600 mm;
Width: 600 mm - 900 mm.

The material to be used for the plastic parts of the cabinet may be glass filled nylon or glass filled PC/ABS.

The above description of an embodiment applying the innovative principles of the invention is provided solely for the purpose of illustrating said principles and must thus not be considered as limiting the scope of the invention claimed herein.

As a possible alternative, the L-shaped panels may form part of the lateral wall and part of the front wall, instead of forming part of the lateral wall and part of the rear wall as described with reference to figures 1 - 8.

Further, the angular panels must not have necessarily an L-shaped cross section, but could also have a generally C-shaped, E-shaped or T-shaped cross section in an horizontal plane; for example, the angular panel 18 of figure 2 might include a further portion forming a part of the front wall extending from the edge of the portion 31 opposite to the second portion 30. For example, a T-shaped panel may form, in addition to part of the side wall and of the rear wall, a wall portion extending perpendicularly to the rear wall on the back of the cabinet, so as to form a spacer between the rear wall of the cabinet and a wall of a room in which the cabinet is installed.

## Claims

1. A cabinet (11) for receiving one or more modules (29) for handling cables, comprising:
a housing comprising a rear wall (16), a bottom wall (13), a top wall (12), a first side wall (15), a second side wall (14) and a front wall provided with a door (17a, 17b) for accessing inside the housing, wherein when the door (17a, 17b) is open the inside of the cabinet can be accessed and the one or more modules (29) for handling the cables can be reached by an operator, and a plurality of single-piece angular panels (18, 19) each comprising a first portion (31) forming part of one of said side walls (15) and a second portion (30) forming part of one of the rear (16) or front walls,
wherein the length (a, b) of the first (31) and of the second (30) portions in the horizontal direction with respect to the cabinet is at least 10% of the height (h) of each of said single-piece angular panels in the vertical direction with respect to the cabinet (11),
wherein the cabinet includes a plurality of said single-piece angular panels (18) vertically stacked each on the other, and
wherein each of said single-piece angular panels (18, 19) includes male engaging means (33, 34) on a first side and female engaging means (35, 36) on a second side opposite to the first side, the male and female engaging means of an angular panel being adapted for engaging respectively with the female and male engaging means of an adjacent angular panel (18, 19) of a plurality of stacked angular panels.

2. The cabinet according to claim 1, **characterized in that** each of said single-piece angular panels (18,19) is an L-shaped panel having an L-shaped cross section in an horizontal plane with respect to the cabinet.

3. The cabinet according to any of claims 1 or 2, **characterized in that** said first portion (31) of said angular panels forms a segment of said first side wall (15) extending from the rear wall (16) to the front wall (17a, 17b).

4. The cabinet according to one or more of the preceding claims, **characterized in that** the cabinet (11) comprises a first angular panel (18) and a second angular panel (19), the first angular panel (18) forming part of said first side wall (15), the second angular panel (19) forming part of the second side wall (14).

5. The cabinet according to claim 3 or 4, **characterized in that** all angular panels (18, 19) are substantially identical to each other.

6. The cabinet according to claim 4, **characterized by** comprising a back panel (50) interposed between said first and second angular panels (18, 19) for forming the back wall (16) of the housing.

7. The cabinet according to one or more of the preceding claims, **characterized by** comprising at least two vertical rails (27, 28) inside the housing, on which the modules (29) can be mounted.

8. The cabinet according to claim 7, **characterized in that** the bottom wall (21) is supported by a plurality of feet (22), wherein each of said rails (27, 28) are mounted vertically aligned with one of said plurality of feet (22).

9. The cabinet according to one or more of the preceding claims, **characterized in that** the top wall (12) is formed by a top panel (20) engaged with an upper angular panel (18, 19) of one or more stacked angular panels, and the bottom wall (13) is formed by a bottom panel (21) engaged a lower angular panel (18, 19) of one or more stacked angular panels.

10. The cabinet according to claim 1, **characterized in that** the male engaging means (33, 34) includes one or more projections extending in a longitudinal direction of the angular panel (18, 19) corresponding to the vertical direction with respect to the cabinet.

11. The cabinet according to one or more of the preceding claims, **characterized in that** the angular panels (18, 19), the bottom panel (21) and the top panel (20) are made of polymeric thermoplastic material.

12. The cabinet according to any of the preceding claims, **characterized in that** said length (a, b) of the first (31) and of the second (30) portions in the horizontal direction with respect to the cabinet is at least 20% of the height (h) each of the angular panels in the vertical direction with respect to the cabinet (11).

13. The cabinet according to any of claims 1 or 3-12, **characterized in that** the cross section of each of the angular panels (18, 19) in a horizontal plane with respect to the cabinet is any of C-shaped cross section, E-shaped cross section and T-shaped cross section.

14. A kit for forming a cabinet according to any of the preceding claims, including the walls (12-16) and a door (17a, 17b) and a plurality of angular panels (18, 19) according to any of the preceding claims, said single-piece angular panels configured for forming at least part of a side wall (15) and part of one of the rear (16) or front wall of the housing of the cabinet.

## Patentansprüche

1. Schrank (11) zur Aufnahme eines oder mehrerer Module (29) zur Handhabung von Kabeln, umfassend:
ein Gehäuse umfassend eine Rückwand (16), eine Bodenwand (13), eine obere Wand (12), eine erste Seitenwand (15), eine zweite Seitenwand (14) und eine Vorderwand, die mit einer Tür (17a, 17b) für den Zugang zum Inneren des Gehäuses bereitgestellt ist, wobei bei geöffneter Tür (17a, 17b) das Innere des Schranks zugänglich ist und das eine oder die mehreren Module (29) zur Handhabung der Kabel von einer Bedienungsperson erreicht werden können, und
eine Vielzahl von einteiligen Winkelplatten (18, 19), die jeweils einen ersten Abschnitt (31), der einen Teil einer der Seitenwände (15) bildet, und einen zweiten Abschnitt (30), der einen Teil einer der Rück- (16) oder Vorderwände bildet, umfassen,
wobei die Länge (a, b) des ersten (31) und des zweiten (30) Abschnitts in horizontaler Richtung in Bezug auf den Schrank mindestens 10 % der Höhe (h) jeder der einteiligen Winkelplatten in vertikaler Richtung in Bezug auf den Schrank (11) beträgt,
wobei der Schrank eine Vielzahl der einteiligen Winkelplatten (18) einschließt, die vertikal aufeinander gestapelt sind, und wobei jede der einteiligen Winkelplatten (18, 19) männliche Eingriffsmittel (33, 34) auf einer ersten Seite und weibliche Eingriffsmittel (35, 36) auf einer zweiten, der ersten Seite gegenüberliegenden Seite einschließt, wobei die männlichen und weiblichen Eingriffsmittel einer Winkelplatten für den Eingriff mit den weiblichen bzw. männlichen Eingriffsmitteln einer benachbarten Winkelplatten (18, 19) einer Vielzahl von gestapelten Winkelplatten ausgelegt sind.

2. Schrank nach Anspruch 1, **dadurch gekennzeichnet, dass** jede der einteiligen Winkelplatten (18, 19) eine L-förmige Platte ist, die einen L-förmigen Querschnitt in einer horizontalen Ebene in Bezug auf den Schrank aufweist.

3. Schrank nach einem der Ansprüche 1 oder 2, **dadurch gekennzeichnet, dass** der erste Abschnitt (31) der Winkelplatten ein Segment der ersten Seitenwand (15) bildet, das sich von der Rückwand (16) zu der Vorderwand (17a, 17b) erstreckt.

4. Schrank nach einem oder mehreren der vorstehenden Ansprüche, **dadurch gekennzeichnet, dass** der Schrank (11) eine erste Winkelplatte (18) und eine zweite Winkelplatte (19) umfasst, wobei die erste Winkelplatte (18) einen Teil der ersten Seitenwand (15) bildet und die zweite Winkelplatte (19) einen Teil der zweiten Seitenwand (14) bildet.

5. Schrank nach Anspruch 3 oder 4, **dadurch gekennzeichnet, dass** alle Winkelplatten (18, 19) im Wesentlichen identisch zueinander sind.

6. Schrank nach Anspruch 4, **dadurch gekennzeichnet, dass** er eine Rückwand (50) umfasst, die zwischen der ersten und der zweiten Winkelplatte (18, 19) angeordnet ist, um die Rückwand (16) des Gehäuses zu bilden.

7. Schrank nach einem oder mehreren der vorstehenden Ansprüche, **dadurch gekennzeichnet, dass** er mindestens zwei vertikale Schienen (27, 28) im Inneren des Gehäuses aufweist, an denen die Module (29) moniert werden können.

8. Schrank nach Anspruch 7, **dadurch gekennzeichnet, dass** die Bodenwand (21) von einer Vielzahl von Füßen (22) getragen wird, wobei jede der Schienen (27, 28) vertikal ausgerichtet mit einem der Vielzahl von Füßen (22) montiert ist.

9. Schrank nach einem oder mehreren der vorstehenden Ansprüche, **dadurch gekennzeichnet, dass** die obere Wand (12) durch eine Deckplatte (20) gebildet wird, die mit einer oberen Winkelplatte (18, 19) einer oder mehrerer gestapelter Winkelplatten in Eingriff steht, und die untere Wand (13) durch eine untere Platte (21) gebildet wird, die mit einer unteren Winkelplatte (18, 19) einer oder mehrerer gestapelter Winkelplatten in Eingriff steht.

10. Schrank nach Anspruch 1, **dadurch gekennzeichnet, dass** die männlichen Eingriffsmittel (33, 34) einen oder mehrere Vorsprünge einschließen, die sich in einer Längsrichtung der Winkelplatte (18, 19) erstrecken, die der vertikalen Richtung in Bezug auf den Schrank entspricht.

11. Schrank nach einem oder mehreren der vorstehenden Ansprüche, **dadurch gekennzeichnet, dass** die Winkelplatten (18, 19), die Bodenplatte (21) und die Deckplatte (20) aus polymerem thermoplastischem Material hergestellt sind.

12. Schrank nach einem der vorstehenden Ansprüche, **dadurch gekennzeichnet, dass** die Länge (a, b) des ersten (31) und des zweiten (30) Abschnitts in horizontaler Richtung in Bezug auf den Schrank mindestens 20 % der Höhe (h) jeder der Winkelplatten in vertikaler Richtung in Bezug auf den Schrank (11) beträgt.

13. Schrank nach einem der Ansprüche 1 oder 3-12, **dadurch gekennzeichnet, dass** der Querschnitt jeder der Winkelplatten (18, 19) in einer horizontalen Ebene in Bezug auf den Schrank einen von einem C-förmigen Querschnitt, einem E-förmigen Querschnitt oder einem T-förmigen Querschnitt hat.

14. Bausatz zum Bilden eines Schranks nach einem der vorstehenden Ansprüche, einschließlich der Wände (12-16) und einer Tür (17a, 17b) und einer Vielzahl von Winkelplatten (18, 19) nach einem der vorstehenden Ansprüche, wobei die einteiligen Winkelplatten so konfiguriert sind, dass sie zumindest einen Teil einer Seitenwand (15) und einen Teil der Rückwand (16) oder der Vorderwand des Gehäuses des Schranks bilden.

## Revendications

1. Armoire (11) pour la réception d'un ou de plusieurs modules (29) pour la manipulation de câbles, comprenant :
un boîtier comprenant une paroi arrière (16), une paroi inférieure (13), une paroi supérieure (12), une première paroi latérale (15), une seconde paroi latérale (14) et une paroi avant dotée d'une porte (17a, 17b) pour accéder à l'intérieur du boîtier, dans laquelle lorsque la porte (17a, 17b) est ouverte, l'intérieur de l'armoire est accessible et les un ou plusieurs modules (29) pour la manipulation des câbles peuvent être atteints par un opérateur, et
une pluralité de panneaux angulaires en une seule pièce (18, 19) comprenant chacun une première portion (31) formant une partie d'une desdites parois latérales (15) et une seconde portion (30) formant une partie d'une des parois arrière (16) ou avant,
dans laquelle la longueur (a, b) des première (31) et seconde (30) portions dans la direction horizontale par rapport à l'armoire est au moins de 10 % de la hauteur (h) de chacun desdits panneaux angulaires en une seule pièce dans la direction verticale par rapport à l'armoire (11),
dans laquelle l'armoire inclut une pluralité de dits panneaux angulaires en une seule pièce (18) empilés verticalement les uns sur les autres, et dans laquelle chacun desdits panneaux angulaires en une seule pièce (18, 19) inclut des moyens d'engagement mâles (33, 34) sur un premier côté et des moyens d'engagement femelles (35, 36) sur un second côté opposé au premier côté, les moyens d'engagement mâles et femelles d'un panneau angulaire étant adaptés pour s'engager respectivement avec les moyens d'engagement femelles et mâles d'un panneau angulaire adjacent (18, 19) d'une pluralité de panneaux angulaires empilés.

2. Armoire selon la revendication 1, **caractérisée en ce que** chacun desdits anneaux angulaires en une seule pièce (18, 19) est un panneau en forme de L présentant une section transversale en forme de L dans un plan horizontal par rapport à l'armoire.

3. Armoire selon l'une quelconque des revendications 1 ou 2, **caractérisée en ce que** ladite première portion (31) desdits panneaux angulaires forme un segment de ladite première paroi latérale (15) s'étendant de la paroi arrière (16) à la paroi avant (17a, 17b).

4. Armoire selon l'une ou plusieurs des revendications précédentes, **caractérisée en ce que** l'armoire (11) comprend un premier panneau angulaire (18) et un second panneau angulaire (19), le premier panneau angulaire (18) formant une partie de la dite première paroi latérale (15), le second panneau angulaire (19) formant une partie de la seconde paroi latérale (14).

5. Armoire selon la revendication 3 ou 4, **caractérisée en ce que** tous les panneaux angulaires (18, 19) sont sensiblement identiques les uns aux autres.

6. Armoire selon la revendication 4, **caractérisée en ce qu'**elle comprend un panneau arrière (50) interposé entre lesdits premier et second panneaux angulaires (18, 19) pour la formation de la paroi arrière (16) du boîtier.

7. Armoire selon l'une ou plusieurs des revendications précédentes, **caractérisée en ce qu'**elle comprend au moins deux rails verticaux (27, 28) à l'intérieur du boîtier, sur lesquels les modules (29) peuvent être montés.

8. Armoire selon la revendication 7, **caractérisée en ce que** la paroi inférieure (21) est supportée par une pluralité de pieds (22), dans laquelle chacun desdits rails (27, 28) est monté verticalement sur un de ladite pluralité de pieds (22).

9. Armoire selon l'une ou plusieurs des revendications précédentes, **caractérisée en ce que** la paroi supérieure (12) est formée par un panneau supérieur (20) mis en prise avec un panneau angulaire supérieur (18, 19) des un ou plusieurs panneaux angulaires empilés, et la paroi inférieure (13) est formée par un panneau inférieur (21) mis en prise avec un panneau angulaire inférieur (18, 19) des un ou plusieurs panneaux angulaires empilés.

10. Armoire selon la revendication 1, **caractérisée en ce que** les moyens d'engagement mâles (33, 34) incluent une ou plusieurs saillies s'étendant dans une direction longitudinale du panneau angulaire (18, 19) correspondant à la direction verticale par rapport à l'armoire.

11. Armoire selon l'une ou plusieurs des revendications précédentes, **caractérisée en ce que** les panneaux angulaires (18, 19), le panneau inférieur (21) et le panneau supérieur (20) sont réalisés en matériau thermoplastique polymère.

12. Armoire selon l'une quelconque des revendications précédentes, **caractérisée en ce que** ladite longueur (a, b) des première (31) et seconde (30) portions dans la direction horizontale par rapport à l'armoire est au moins de 20 % de la hauteur (h) de chacun des panneaux angulaires dans la direction verticale par rapport à l'armoire (11).

13. Armoire selon l'une quelconque des revendications 1 ou 3-12, **caractérisée en ce que** la section transversale de chacun des panneaux angulaires (18, 19) dans un plan horizontal par rapport à l'armoire est l'une quelconque de la section transversale en C, la section transversale en E et la section transversale en T.

14. Kit pour la formation d'une armoire selon l'une quelconque des revendications précédentes, incluant les parois (12-16) et une porte (17a, 17b) et une pluralité de panneaux angulaires (18, 19) selon l'une quelconque des revendications précédentes, lesdits panneaux angulaires en une seule pièce étant configurés pour la formation d'au moins une partie d'une paroi latérale (15) et d'une partie d'une de la paroi arrière (16) ou avant du boîtier de l'armoire.
